# EUROPÄISCHE PATENTSCHRIFT

(11) **EP 1 697 087 B1**
(45) Veröffentlichungstag und Bekanntmachung des Hinweises auf die Patenterteilung: **17.09.2014**
(21) Anmeldenummer: 04798179.0
(22) Anmeldetag: 08.11.2004
(51) Int. Cl.: B24B 55/10, B25F 5/02, B23Q 11/00

(54) **Elektrohandwerkzeugmaschine**
Electric hand-held machine tool
Machine-outil à main electrique

(30) Priorität: 15.12.2003 DE 10358583
(43) Veröffentlichungstag der Anmeldung: 06.09.2006
(73) Patentinhaber: ROBERT BOSCH GMBH, 70442 Stuttgart (DE)
(72) Erfinder: REICH, Doris, 70565 Stuttgart (DE); WUENSCH, Steffen, 71088 Holzgerlingen (DE); SIEBER, Gustav, H-1000 Miskolc (HU)
(86) Internationale Anmeldenummer: PCT/EP2004/052860
(87) Internationale Veröffentlichungsnummer: WO 2005/056236

(56) Entgegenhaltungen:
- EP-A- 1 285 727
- EP-A- 1 340 591
- DE-A1- 4 032 069
- DE-A1- 19 831 383
- DE-C- 865 970
- DE-U1- 9 208 940

## Beschreibung

### Stand der Technik

Die Erfindung geht aus von einer Elektrohandwerkzeugmaschine nach dem Oberbegriff des Anspruchs 1.

Insbesondere bei Elektrohandschleifmaschinen, wie Exzenter- oder Schwingschleifer, werden zum Auffangen des Schleifstaubs Stoffsäcke, Papiersäcke oder Boxen verwendet, die mittels eines abstehenden Einlassstutzens auf einen am Maschinengehäuse ausgebildeten Staubauswurfstutzen, der eine im Maschinengehäuse vorhandene Staubauswurföffnung umschließt, aufgeschoben werden. Während die Papiersäcke und Stoffbeutel als Wegwerfeinheiten konzipiert sind, die zusammen mit dem aufgefangenen Staub entsorgt werden besitzen die Boxen eine Staubsammelkammer, die nach Öffnen der Box für den wiederholten Gebrauch des Staubauffangbehälters entleert werden kann. Der Einlassstutzen mündet in der Staubsammelkammer und die Staubsammelkammer, steht mit einer Abluftöffnung, der ein Staubfilter vorgeordnet ist, in Verbindung steht.

Bei einer bekannten Elektrohandwerkzeugmaschine (EP 1340 591 A1) ist der mit einem abklappbaren Deckel verschlossene Staubsammelkasten als ein an das Maschinengehäuse anbringbares und vom Maschinengehäuse abnehmbares Gehäusebauteil ausgebildet, das so geformt ist, dass es nahtlos an das Maschinengehäuse und ein am Maschinengehäuse angeformtes Griffteil anschließt und mit Maschinengehäuse und Griffteil eine organisch wirkende Gesamtform bildet. Im Staubsammelkasten ist ein Staubfilter angeordnet. Der Deckel verschließt eine Kastenöffnung im Staubsammelkasten, die der Staubeinblasöffnung des Stabsammelkastens direkt gegenüberliegend angeordnet ist. Durch die Kastenöffnung kann bei abgeschwenktem Deckel der Staubsammelkasten entleert und der Staubfilter gewechselt werden.

Bei einem bekannten Exzenterschleifer (EP 1 285 727 A1) ist am Maschinengehäuse ein Staubauslassstutzen angeformt, der endseitig zur Verbindung mit einem Staubsammelkanister ausgebildet ist. Der Staubsammelkanister hat Zylinderform und weist einen Tragrahmen sowie einen auf den Tragrahmen aufgeschobenen Staubsack auf.

Bei einer bekannten Hand-Schleifmaschine (DE 40 32 069 A1) ist am Maschinengehäuse ein rohrförmiger Handgriff angeformt, der ein Abführrohr für den Schleifstaub bildet. Auf das freie Ende des Handgriffs ist ein Absaugschlauch einer Absaugvorrichtung aufgesteckt.

Bei einer bekannten Handwerkzeugmaschine mit Staubabsaugung (DE 198 31 383 A1) ist am Maschinengehäuse ein Staubausblasstutzen angeformt. Auf dem Staubausblasstutzen ist lösbar eine freitragende Staubbox befestigt. Die Staubbox weist einen Staubsammelkasten, einen am Staubsammelkasten angeformten, im Staubsammelkasten mündenden Einblasstutzen und einen den Staubsammelkasten auf dessen Oberseite verschließenden Deckel mit einem am Deckel befestigten Staubfilter auf. Die Staubbox ist mit dem Einblasstutzen auf den Staubausblasstutzen des Maschinengehäuses staubdicht aufgeschoben und am Maschinengehäuse lösbar verrastet. Zur Staubentleerung wird die Staubbox nach Lösen der Verrastung von dem Staubausblasstutzen abgezogen, der Deckel mit daran befestigtem Staubfilter von dem Staubsammelkasten abgehoben und der Staubsammelkasten ausgeschüttet.

Es ist bereits vorgeschlagen worden, einen Staubauffangbehälter für eine Elektrohandschleifmaschine als Box mit einem eingezogenen, integrierten Einlassstutzen und einer oberhalb des Einlassstutzens angeordneten Staubsammelkammer auszubilden. Die Staubsammelkammer ist mit einem abnehmbaren Deckel verschlossen, der eine Abluftöffnung aufweist und einen der Ablauföffnung vorgesetzten Staubfilter trägt. Der Einlassstutzen wird auf den am Maschinengehäuse ausgebildeten Staubauswurfstutzen aufgeschoben, wodurch ein Staubauffangbehälter kompakter Ausführung mit kurzer Baulänge erzielt wird, der beim Arbeiten mit der Handschleifmaschine nicht stört und zwecks Entleerung bequem vom Staubauswurfstutzen der Maschine abgezogen und danach wieder aufgeschoben werden kann. Zum Entleeren der Staubsammelkammer muss der Deckel mit dem daran befestigten Staubfilter abgenommen werden.

### Vorteile der Erfindung

Die erfindungsgemäße Elektrohandwerkzeugmaschine mit den Merkmalen des Anspruchs 1 hat den Vorteil, dass dadurch, dass der Staubsammelkasten integraler Bestandteil des Maschinengehäuses ist, ein separates Gehäuse für den Staubauffangbehälter eingespart und damit eine erhebliche Kostenreduktion bei der Fertigung der Elektrohandwerkzeugmaschine erzielt wird. Darüber hinaus ergibt sich eine verbesserte und vereinfachte Handhabung der Maschine, da der Staubauffangbehälter zum Entleeren nicht mehr vom Maschinengehäuse getrennt, also demontiert oder abgezogen werden muss, sondern nur noch der Deckel von dem Staubsammelkasten abgenommen zu werden braucht. Dadurch lassen sich insbesondere bei Elektrohandwerkzeugmaschinen mit einem hohen Staubanfall verkürzte Arbeitszeiten erzielen.

Durch die in den weiteren Ansprüchen aufgeführten Maßnahmen sind vorteilhafte Weiterbildungen und Verbesserungen der im Anspruch 1 angegebenen Elektrohandwerkzeugmaschine möglich.

### Zeichnung

Die Erfindung ist anhand von in der Zeichnung dargestellten Ausführungsbeispielen in der nachfolgenden Beschreibung näher erläutert. Es zeigen:
- Fig. 1: eine Seitenansicht eines Exzenterschleifers mit im Schnitt dargestellten Staubauffangbehälter,
- Fig. 2 bis 4: ausschnittweise eine gleiche Darstellung wie in Fig. 1 gemäß dreier Ausführungsvarianten des Exzenterschleifers in Fig. 1,
- Fig. 5: eine Seitenansicht eines Exzenterschleifers mit integriertem Staubauffangbehälter gemäß einem zweiten Ausführungsbeispiel,
- Fig. 6: eine Ansicht des Exzenterschleifers in Richtung Pfeil VI in Fig. 5,
- Fig. 7: eine Seitenansicht eines Exzenterschleifers mit integriertem Staubauffangbehälter gemäß einem dritten Ausführungsbeispiel,
- Fig. 8: eine Ansicht des Exzenterschleifers in Richtung Pfeil VIII in Fig. 7 mit geöffnetem Staubauffangbehälter,
- Fig. 9: eine Seitenansicht eines Exzenterschleifers mit integriertem Staubauffangbehälter gemäß einem vierten Ausführungsbeispiel,
- Fig. 10: eine Seitenansicht eines Exzenterschleifers mit integriertem Staubauffangbehälter gemäß einem fünften Ausführungsbeispiel,
- Fig. 11: eine perspektivische Darstellung eines im Staubauffangbehälter des Exzenterschleifers vorhandenen Staubfilters.

### Beschreibung der Ausführungsbeispiele

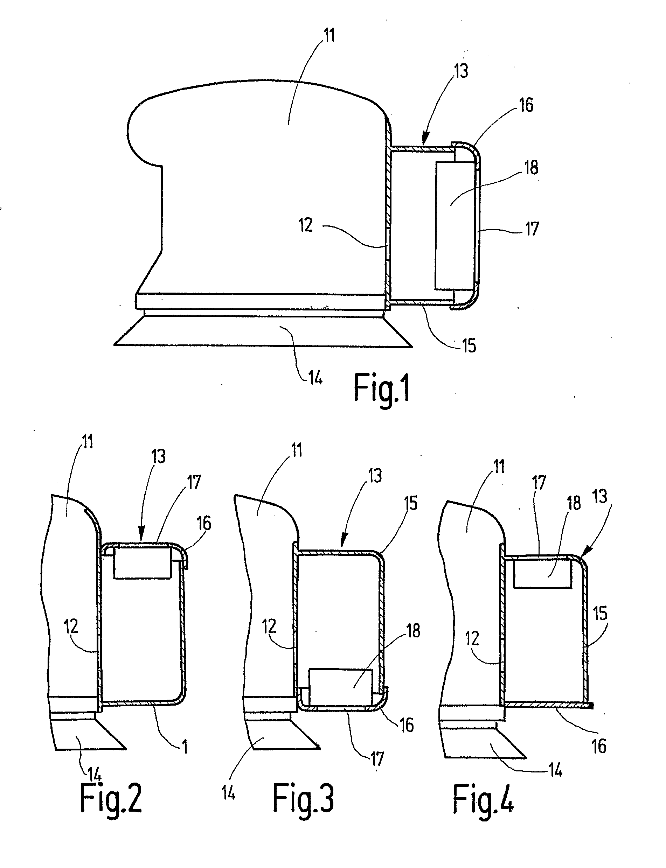

Der in Fig. 1 als Ausführungsbeispiel für eine allgemeine Elektrohandwerkzeugmaschine in Seitenansicht dargestellte Exzenterschleifer weist ein Maschinengehäuse 11, mindestens eine im Maschinengehäuse 11 ausgebildete Staubauswurföffnung 12 und einen an letztere angeschlossenen Staubauffangbehälter 13 auf, wobei ein im Maschinengehäuse 11 angeordnetes Gebläse Schleifstaub von der Oberfläche eines bearbeiteten Werkstücks ansaugt und über die Staubauswurföffnung 12 in den Staubauffangbehälter 13 ein bläst. Das Gebläse wird von einem elektrischen Antriebsmotor angetrieben, der auch den am Maschinengehäuse 11 vorstehenden Schleifteller 14 antreibt. Ein möglicher Aufbau des Exzenterschleifers ist in der US 5 018 314 dargestellt und ausführlich beschrieben.

Der Staubauffangbehälter 13 weist einen Staubsammelkasten, im folgenden kurz Sammelkasten 15 genannt, und einen den Sammelkasten 15 abschließenden Deckel 16 auf. Der Deckel 16 ist mit einer Abluftöffnung 17 versehen, der ein Staubfilter 18 vorgesetzt ist. Der Staubfilter 18 ist an der Innenseite des Deckels 16 befestigt und wird beim Öffnen des Sammelkastens 15 durch Abnahme des Deckels 16 aus dem Sammelkasten 15 entfernt. Der Sammelkasten 15 ist einstückig mit dem Maschinengehäuse 11 ausgebildet und ist zusammen mit dem Maschinengehäuse 11 als Kunststoffspritzteil ausgeführt. Er weist im Ausführungsbeispiel der Fig. 1 Quaderform mit zwei offenen, einander gegenüberliegenden Seiten auf, von denen die erste offene Seite am Maschinengehäuse 11 ansetzt und die Staubauswurföffnung 12 überdeckt und die zweite offene Seite mit dem Deckel 16 verschlossen ist. Die beiden offenen Seiten sind zwei der querschnittsgrößere Längsseiten des Sammelkastens 15.

In den Ausführungsvarianten des Staubauffangbehälters 13 gemäß Fig. 2, 3 und 4 weist der Sammelkasten 15 wiederum Quaderform mit zwei offenen Seiten auf, von denen die erste offene Seite eine der querschnittsgrößeren Längsseiten des Sammelkastens 15 und die zweite offene Seite die in Arbeitsstellung des Maschinengehäuses 11 obere (Fig. 2) oder untere (Fig. 3) querschnittskleinere Stirnseite des Sammelkastens 15 ist. Während die erste offene, querschnittsgrößere Längsseite des einstückig mit dem Maschinengehäuse 11 ausgeführten Sammelkastens 15 an dem Maschinengehäuse 11, die Staubauswurföffnung 12 überdeckend, ansetzt, ist die zweite offene, querschnittskleinere Stirnseite des Sammelkastens 15 von dem Deckel 16 abgedeckt. Bei dem Staubauffangbehälter 13 gemäß Fig. 2 und 3 ist der Deckel 16 wiederum mit der Abluftöffnung 17 versehen und der Staubfilter 18 am Deckel 16 befestigt. Im Ausführungsbeispiel der Fig. 4 ist die Abluftöffnung 17 in der dem Deckel 16 gegenüberliegenden, obere Stirnwand des Sammelkastens 15 angeordnet und der Staubfilter 18 im Sammelkasten 15 befestigt. Der Deckel 16 überdeckt die in Arbeitsstellung des Mäschinegehäuses 11 untere der beiden querschnittskleineren Stirnseiten des quaderförmigen Sammelkastens 15.

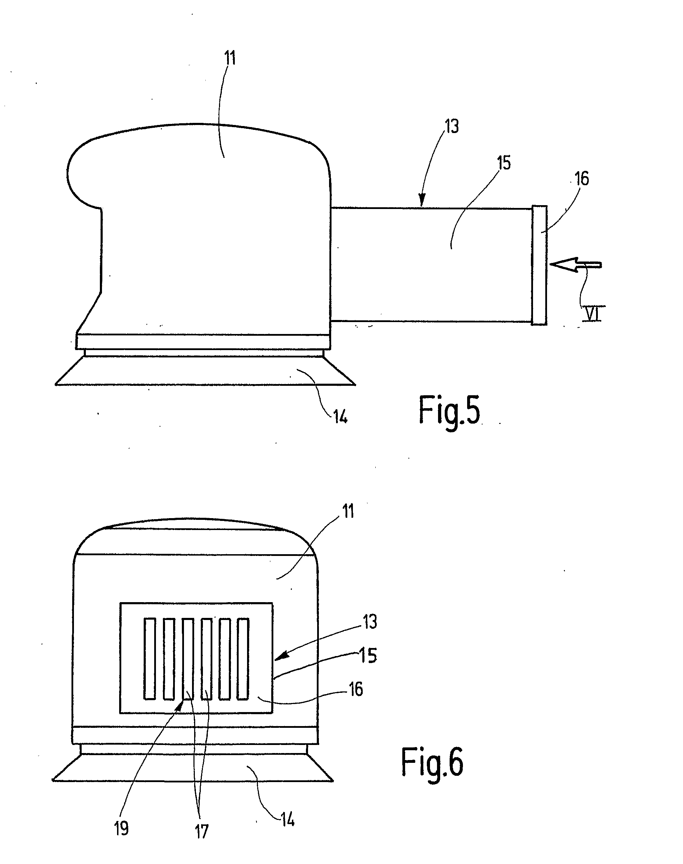

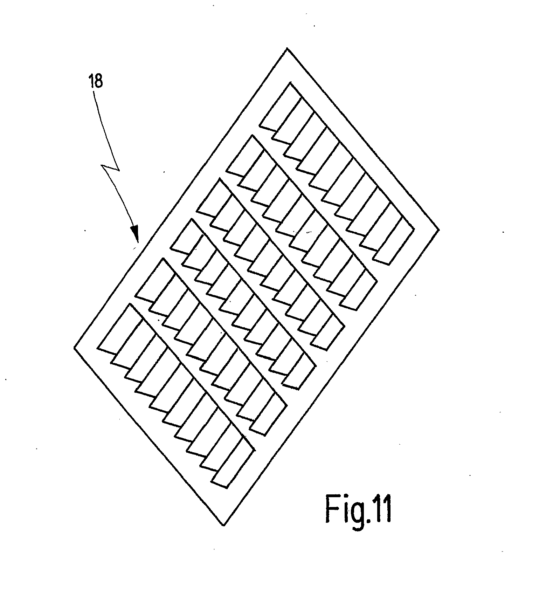

Im Ausführungsbeispiel des Exzenterschleifers gemäß Fig. 5 und 6 ist der mit dem Maschinengehäuse 11 einstückige Sammelkasten 15 ebenfalls als Quader ausgebildet, bei dem jedoch die einander gegenüberliegenden querschnittskleineren Stirnseiten offen sind. Die eine offene Stirnseite setzt wiederum an dem Maschinengehäuse 11 an und überdeckt die dortige Staubauswurföffnung, während die andere Stirnseite von dem Deckel 16 abgedeckt ist. Der Deckel 16 ist wiederum mit der Abluftöffnung 17 versehen, die in Form eines Gitters 19 ausgeführt ist. Wie nicht weiter dargestellt ist, ist dem Gitter 19 der Staubfilter vorgeordnet, der beispielsweise, wie in Fig. 11 dargestellt, als umspritzter Faltenfilter ausgeführt ist. Der Staubfilter kann dabei am Deckel 16 befestigt sein, so dass er beim Abnehmen des Deckels 16 mit entfernt wird. Statt dessen kann er auch als separates Bauteil in den Sammelkasten 15 eingesetzt sein, so dass er nach Entfernen des Deckels 16 gesondert aus dem Sammelkasten 15 herausgenommen werden muss, wenn letzterer entleert werden soll.

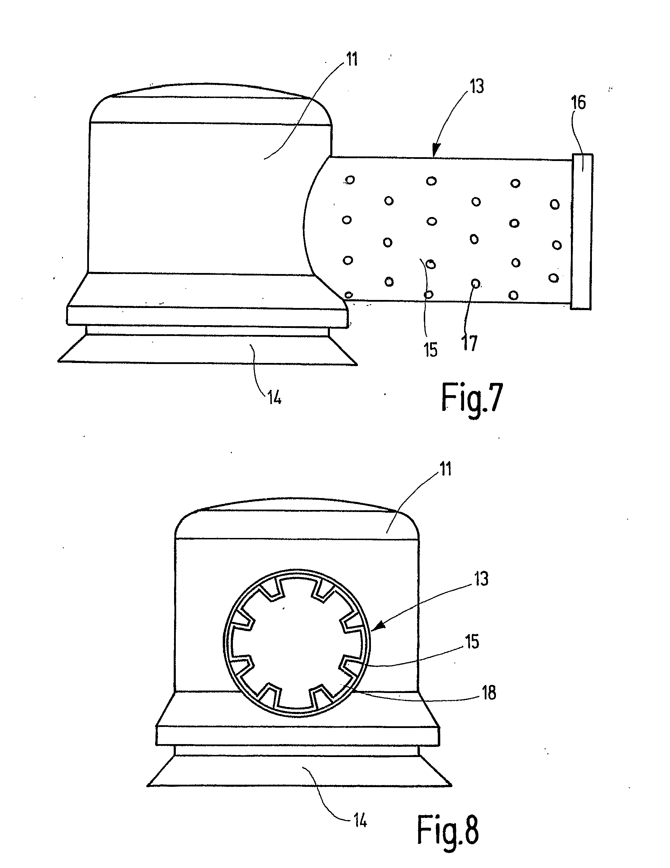

Bei dem in Fig. 7 und 8 dargestellten Ausführungsbeispiel des Exzenterschleifers mit integriertem Staubauffangbehälter 13 ist der mit dem Maschinegehäuse 11 einstückige Sammelkasten 15 als stirnseitig offener Zylinder ausgeführt. Die eine offene Stirnseite setzt so an dem Maschinengehäuse 11 an, dass die im Maschinengehäuse 11 vorgesehene Staubauswurföffnung von dem Sammelkasten 15 umschlossen ist. Auf die andere offene Stirnseite des Sammelkastens 15 ist ein kappenartiger Deckel 16 aufgesetzt, der zum Entleeren des Staubs abgenommen werden kann. Der z.B. als Faltenfilter ausgebildete Staubfilter 18 ist entweder als separates Bauelement in den Sammelkasten 15 nahe dessen deckelseitigem Ende eingesetzt und wird mit Aufsetzen des Deckels 16 axial unverschieblich im Sammelkasten 15 festgelegt oder er ist am Deckel 16 befestigt. In Fig. 8 ist der Staubfilter 18 nach abgenommenem Deckel 16 in Draufsicht zu sehen. Abweichend von den vorherigen Ausführungsbeispielen mit einer Abluftöffnung können in der Wandung des Sammelkastens 15 mehrere Abluftöffnungen 17 in Form von Löchern vorgesehen sein.

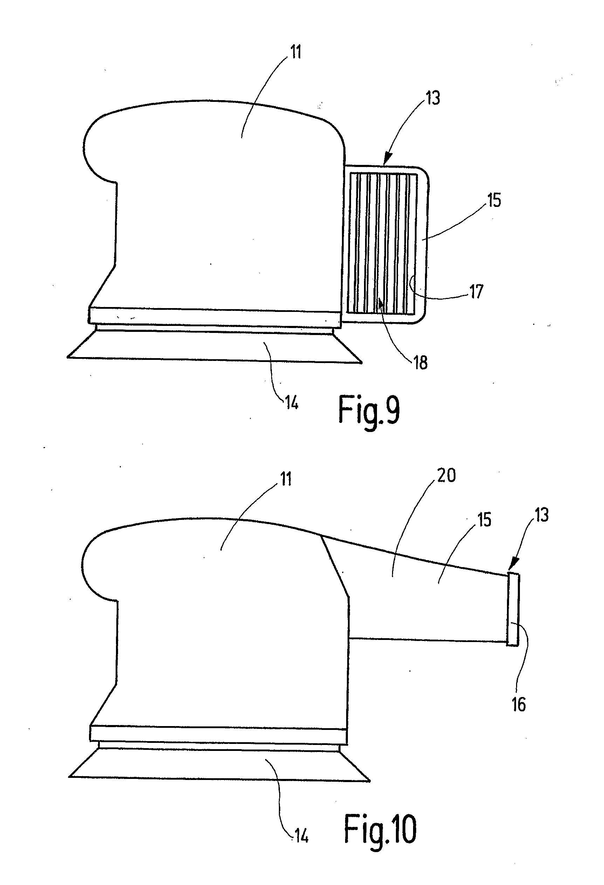

Bei dem in Fig. 9 in Seitenansicht dargestellten Exzenterschleifer ist der Sammelkasten 15 ebenfalls quaderförmig mit zwei offenen Längsseiten ausgebildet, die im rechten Winkel zueinander ausgerichtet sind, also an einer Längskante des Sammelkastens 15 aneinanderstoßen. Die eine der querschnittsgrößeren Längsseiten ist wiederum einstückig an das Maschinengehäuse 11 angebunden, während die um 90° versetzte, querschnittsgrößere offene Längsseite vom Deckel 16 verschließbar ist. In Fig. 9 ist der Staubauffangbehälter 13 mit abgenommenem Deckel dargestellt. Der Staubfilter 18, der beispielsweise wiederum als Faltenfilter gemäß Fig. 11 ausgeführt sein kann, ist als separates, herausnehmbares Bauteil eingesetzt.

Im Ausführungsbeispiel des Exzenterschleifers gemäß Fig. 10 ist ein hohler Handgriff 20 zum Führen des Exzenterschleifers als Staubauffangbehälter 13 am Maschinengehäuse 11 einstückig angeformt. Das Griffgehäuse bildet den Sammelkasten 15, der an seinem vom Maschinengehäuse 11 abgekehrten, offenen, freien Ende wiederum durch den Deckel 16 verschließbar ist. Im Maschinengehäuse 11 ist ein entsprechender Luftführungskanal ausgebildet, der vom Gebläse abführt und in der Staubauswurföffnung des Maschinengehäuses 11 mündet. Die Staubauswurfsöffnung ist von dem den Handgriff 20 bildenden Sammelkasten 15 umschlossen. Der Staubfilter ist auch hier am Deckel 16 angeordnet.

Die verschiedenen Ausführungsvarianten des Staubauffangbehälters 13 können selbstverständlich auch als integraler Bestandteil des Maschinengehäuses 11 eines Schwingschleifers oder einer sonstigen Schleif- oder Sägestaub erzeugenden Elektrohandwerkzeugmaschine eingesetzt werden.

Bei den gezeigten Ausführungsbeispielen ist der Staubfilter 18 jeweils im Staubsammelkasten 15 angeordnet. Bei einem anderen, vorteilhaften Ausführungsbeispiel, das nicht gezeigt ist, kann statt dessen der Staubsammelkasten auch innerhalb des Staubfilters angeordnet sein.

In Fig. 11 ist als ein Ausführungsbeispiel für einen Staubfilter 18 ein im Wesentlichen eben verlaufender, umspritzter Faltenfilter gezeigt. Bei einem anderen, nicht gezeigten Ausführungsbeispiel ist ein solcher Faltenfilter statt dessen rohrförmig gestaltet.

## Patentansprüche

1. Elektrohandwerkzeugmaschine mit einem mindestens eine Staubauswurföffnung (12) aufweisenden Maschinengehäuse (11) und mit einem an der Staubauswurföffnung (12) angeschlossenen Staubauffangbehälter (13), der einen Staubsammelkasten (15) und einen den Staubsammelkasten (15) abschließenden Deckel (16) aufweist, **dadurch gekennzeichnet, dass** der Staubsammelkasten (15) einstückig mit dem Maschinengehäuse (11) ausgeführt ist.

2. Elektrohandwerkzeugmaschine nach Anspruch 1, **dadurch gekennzeichnet, dass** der Staubsammelkasten (15) Quaderform mit zwei offenen Seiten aufweist, von denen die erste offene Seite am Maschinengehäuse (11), dessen Staubauswurföffnung (12) überdeckend, ansetzt und die zweite offene Seite mit dem Deckel (16) verschlossen ist.

3. Elektrohandwerkzeugmaschine nach Anspruch 2, **dadurch gekennzeichnet, dass** die beiden offenen Seiten die querschnittkleineren Stirnseiten des Staubsammelkastens (15) sind.

4. Elektrohandwerkzeugmaschine nach Anspruch 2, **dadurch gekennzeichnet, dass** die beiden offenen Seiten zwei der querschnittsgrößeren Längsseiten des Staubsammelkastens (15) sind.

5. Elektrohandwerkzeugmaschine nach Anspruch 4, **dadurch gekennzeichnet, dass** die beiden offenen Längsseiten des Staubsammelkastens (15) einander gegenüberliegen.

6. Elektrohandwerkzeugmaschine nach Anspruch 4, **dadurch gekennzeichnet, dass** die beiden offenen Längsseiten des Sammelkastens (15) längs einer Seitenlängskante aneinanderstoßen.

7. Elektrohandwerkzeugmaschine nach Anspruch 2, **dadurch gekennzeichnet, dass** die erste offene Seite eine der querschnittsgrößeren Längsseiten des Staubsammelkastens (15) und die zweite offene Seite die in Arbeitsstellung der Maschine obere oder untere der querschnittskleineren Stirnseiten des Sammelkastens (15) ist.

8. Elektrohandwerkzeugmaschine nach Anspruch 1, **dadurch gekennzeichnet, dass** der Staubsammelkasten (15) Zylinderform mit zwei offenen Stirnseiten aufweist, von denen eine am Maschinengehäuse (11), die Staubauswurföffnung (12) umschließend, ansetzt und die andere offene Stirnseite von dem Deckel (16) abgeschlossen ist.

9. Elektrohandwerkzeugmaschine nach einem der Ansprüche 1 bis 8, **dadurch gekennzeichnet, dass** der Staubauffangbehälter (13) mindestens einen Staubfilter (18) und mindestens eine Abluftöffnung (17) Staubfilter (18) aufweist.

10. Elektrohandwerkzeugmaschine nach Anspruch 9, **dadurch gekennzeichnet, dass** der Staubfilter (18) im Staubsammelkasten (15) oder letzterer innerhalb des Staubfilters angeordnet ist.

11. Elektrohandwerkzeugmaschine nach einem der Ansprüche 8 bis 10, **dadurch gekennzeichnet, dass** in der Wandung des Staubsammelkastens (15), insbesondere in dessen Zylinderwandung, mehrere Abluftöffnungen (17) enthalten sind.

12. Elektrohandwerkzeugmaschine nach einem der Ansprüche 9 bis 11, **dadurch gekennzeichnet, dass** die mindestens eine Abluftöffnung (17) im Deckel (16) oder im Sammelkasten (15) ausgebildet ist.

13. Elektrohandwerkzeugmaschine nach einem der Ansprüche 9 bis 12, **dadurch gekennzeichnet, dass** der Staubfilter (18) als separates Bauteil wechselbar am Deckel (16) oder am Sammelkasten (15) befestigt ist.

14. Elektrohandwerkzeugmaschine nach einem der Ansprüche 9 bis 13, **dadurch gekennzeichnet, dass** der Staubfilter (18) unlösbarer Bestandteil des Deckels (16) ist.

15. Elektrohandwerkzeugmaschine nach einem der Ansprüche 9 bis 14, **dadurch gekennzeichnet, dass** der Staubfilter (18) als Faltenfilter ausgebildet ist.

16. Elektrohandwerkzeugmaschine nach Anspruch 15, **dadurch gekennzeichnet, dass** der Faltenfilter rohrförmig gestaltet ist.

17. Elektrohandwerkzeugmaschine nach Anspruch 1, **dadurch gekennzeichnet, dass** am Maschinengehäuse (11) ein Handgriff (20) einstückig angeformt ist und dass der Handgriff (20) als Staubauffangbehälter (13) ausgebildet ist.

## Claims

1. Portable electric power tool having a machine housing (11) that has at least one dust discharge opening (12) and having a dust collecting container (13) connected to the dust discharge opening (12), said dust collecting container (13) having a dust catcher (15) and a cover (16) that closes off the dust catcher (15), **characterized in that** the dust catcher (15) is embodied in one piece with the machine housing (11).

2. Portable electric power tool according to Claim 1, **characterized in that** the dust catcher (15) has a cuboidal shape with two open sides, of which the first open side is positioned against the machine housing (11), covering the dust discharge opening (12) thereof, and the second open side is closed by way of the cover (16).

3. Portable electric power tool according to Claim 2, **characterized in that** the two open sides are the cross-sectionally smaller end sides of the dust catcher (15).

4. Portable electric power tool according to Claim 2, **characterized in that** the two open sides are two of the cross-sectionally larger longitudinal sides of the dust catcher (15).

5. Portable electric power tool according to Claim 4, **characterized in that** the two open longitudinal sides of the dust catcher (15) are located opposite one another.

6. Portable electric power tool according to Claim 4, **characterized in that** the two open longitudinal sides of the catcher (15) butt against one another along a side longitudinal edge.

7. Portable electric power tool according to Claim 2, **characterized in that** the first open side is one of the cross-sectionally larger longitudinal sides of the dust catcher (15) and the second open side is that cross-sectionally smaller end side of the catcher (15) that is the upper or lower end side in the working position of the machine.

8. Portable electric power tool according to Claim 1, **characterized in that** the dust catcher (15) has a cylindrical shape with two open end sides, of which one is positioned on the machine housing (11), enclosing the dust discharge opening (12), and the other open end side is closed off by the cover (16).

9. Portable electric power tool according to one of Claims 1 to 8, **characterized in that** the dust collecting container (13) has at least one dust filter (18) and at least one air exhaust opening (17).

10. Portable electric power tool according to Claim 9, **characterized in that** the dust filter (18) is arranged in the dust catcher (15) or the latter is arranged within the dust filter.

11. Portable electric power tool according to one of Claims 8 to 10, **characterized in that** a plurality of air exhaust openings (17) are contained in the wall of the dust catcher (15), in particular in the cylindrical wall thereof.

12. Portable electric power tool according to one of Claims 9 to 11, **characterized in that** the at least one air exhaust opening (17) is formed in the cover (16) or in the catcher (15).

13. Portable electric power tool according to one of Claims 9 to 12, **characterized in that** the dust filter (18) is secured interchangeably as a separate component to the cover (16) or to the catcher (15).

14. Portable electric power tool according to one of Claims 9 to 13, **characterized in that** the dust filter (18) is a non-detachable constituent of the cover (16).

15. Portable electric power tool according to one of Claims 9 to 14, **characterized in that** the dust filter (18) is in the form of a folded filter.

16. Portable electric power tool according to Claim 15, **characterized in that** the folded filter is formed in a tubular manner.

17. Portable electric power tool according to Claim 1, **characterized in that** a handle (20) is integrally formed on the machine housing (11), and **in that** the handle (20) is in the form of a dust collecting container (13).

## Revendications

1. Machine-outil à main électrique comportant un boîtier de machine (11) comprenant au moins une ouverture d'éjection de poussière (12) et comportant un récipient collecteur de poussière (13) raccordé à l'ouverture d'éjection de poussière (12), lequel comprend une boîte de collecte de poussière (15) et un couvercle (16) fermant la boîte de collecte de poussière (15), **caractérisée en ce que** la boîte de collecte de poussière (15) est réalisée d'une seule pièce avec le boîtier de machine (11).

2. Machine-outil à main électrique selon la revendication 1, **caractérisée en ce que** la boîte de collecte de poussière (15) présente une forme parallélépipédique pourvue de deux côtés ouverts, parmi lesquels le premier côté ouvert s'applique contre le boîtier de machine (11) en recouvrant son ouverture d'éjection de poussière (12) et le deuxième côté ouvert est fermé à l'aide du couvercle (16).

3. Machine-outil à main électrique selon la revendication 2, **caractérisée en ce que** les deux côtés ouverts sont les côtés frontaux de plus petite section transversale de la boîte de collecte de poussière (15).

4. Machine-outil à main électrique selon la revendication 2, **caractérisée en ce que** les deux côtés ouverts sont deux des côtés longitudinaux de plus grande section transversale de la boîte de collecte de poussière (15).

5. Machine-outil à main électrique selon la revendication 4, **caractérisée en ce que** les deux côtés longitudinaux ouverts de la boîte de collecte de poussière (15) sont en regard l'un de l'autre.

6. Machine-outil à main électrique selon la revendication 4, **caractérisée en ce que** les deux côtés longitudinaux ouverts de la boîte de collecte (15) sont contigus l'un à l'autre le long d'une arête longitudinale latérale.

7. Machine-outil à main électrique selon la revendication 2, **caractérisée en ce que** le premier côté ouvert est l'un des côtés longitudinaux de plus grande section transversale de la boîte de collecte de poussière (15) et le deuxième côté ouvert est le côté frontal supérieur ou inférieur parmi les côtés frontaux de plus petite section transversale de la boîte de collecte (15) dans la position de travail de la machine.

8. Machine-outil à main électrique selon la revendication 1, **caractérisée en ce que** la boîte de collecte de poussière (15) présente une forme cylindrique pourvue de deux côtés frontaux ouverts, parmi lesquels l'un s'applique contre le boîtier de machine (11) en entourant l'ouverture d'éjection de poussière (12) et l'autre côté frontal ouvert est fermé par le couvercle (16).

9. Machine-outil à main électrique selon l'une quelconque des revendications 1 à 8, **caractérisée en ce que** le récipient collecteur de poussière (13) comprend au moins un filtre à poussière (18) et au moins une ouverture d'évacuation d'air (17).

10. Machine-outil à main électrique selon la revendication 9, **caractérisée en ce que** le filtre à poussière (18) est disposé dans la boîte de collecte de poussière (15) ou cette dernière est disposée à l'intérieur du filtre à poussière.

11. Machine-outil à main électrique selon l'une quelconque des revendications 8 à 10, **caractérisée en ce que** plusieurs ouvertures d'évacuation d'air (17) sont contenues dans la paroi de la boîte de collecte de poussière (15), en particulier dans sa paroi cylindrique.

12. Machine-outil à main électrique selon l'une quelconque des revendications 9 à 11, **caractérisée en ce que** l'au moins une ouverture d'évacuation d'air (17) est réalisée dans le couvercle (16) ou dans la boîte de collecte (15).

13. Machine-outil à main électrique selon l'une quelconque des revendications 9 à 12, **caractérisée en ce que** le filtre à poussière (18) est fixé, en tant que composant séparé, de manière remplaçable sur le couvercle (16) ou sur la boîte de collecte (15).

14. Machine-outil à main électrique selon l'une quelconque des revendications 9 à 13, **caractérisée en ce que** le filtre à poussière (18) est une partie non amovible du couvercle (16).

15. Machine-outil à main électrique selon l'une quelconque des revendications 9 à 14, **caractérisée en ce que** le filtre à poussière (18) est réalisé sous forme de filtre plissé.

16. Machine-outil à main électrique selon la revendication 15, **caractérisée en ce que** le filtre plissé est configuré sous forme tubulaire.

17. Machine-outil à main électrique selon la revendication 1, **caractérisée en ce qu'**une poignée (20) est formée d'un seul tenant sur le boîtier de machine (11), et **en ce que** la poignée (20) est réalisée sous forme de récipient collecteur de poussière (13).
